Europäisches Patentamt

European Patent Office

Office européen des brevets

(11) Publication number: **0 463 616 A2**

# EUROPEAN PATENT APPLICATION

(21) Application number: **91110554.2**

(22) Date of filing: **26.06.91**

(51) Int. Cl.⁵: **G06F 15/21**

(30) Priority: **27.06.90 JP 168667/90**

(43) Date of publication of application:
**02.01.92 Bulletin 92/01**

(84) Designated Contracting States:
**DE FR GB**

(71) Applicant: **FUJITSU LIMITED**
**1015, Kamikodanaka Nakahara-ku**
**Kawasaki-shi Kanagawa 211(JP)**

(72) Inventor: **Nagatsu, Mamoru**
**3208, Garner Lane**
**Plano, TX 75075(US)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **System and method for automatically answering production status inquiry.**

(57) A method for automatically answering a production status inquiry supplied from an external device has the following steps. The production status inquiry is received (steps 11, 110). Next, it is determined whether or not each item related to the production status inquiry can be delivered on a requested delivery date by comparing the requested delivery date with a minimum production period necessary for producing each item (steps 12, 111). Each item indicates a respective product. Then, a confirmation report is generated which shows that each item can be delivered on the requested delivery date when it is determined that each item can be delivered on the requested delivery date (step 13, 113). Subsequently, it is determined whether or not each item which is determined not to be able to be delivered on the requested delivery date is allowed to be delivered on an extended delivery date by referring to a database storing an extension period defined for each predetermined item (14, 117). An alarm report is generated which shows that each item cannot be delivered on the requested delivery date when it is determined that delivery of at least one item cannot be extended (steps 16, 116). On the other hand, a delivery date extension report is generated which shows that each item related to the production status inquiry can be delivered on the requested delivery date or the extended delivery date when it is determined that each item which is determined not to be able to be delivered on the requested delivery date can be delivered on the extended delivery date (steps 15, 119).

FIG.2

**FIG.6**

INQUIRY, ETC.

RECEIVING PROCESS — 110

NO    111

ALLOCATION CHECK
FOR EACH ITEM

12

CAN ALL
ITEMS BE ALLOCATER
?
    112     YES   113

NO

14

ONE MONTH
UNTIL REQUESTED
DELIVERY DATE
?    115

116

OUTPUT ALARM
REPORT

117

DELIVERY DATE
EXTENSION
ANSWERING PROCEDURE

OUTPUT
CONFIRMATION
REPORT

NO     EXTENDABLE
?    118

END

YES

DELIVERY DATE EXTENTION
ANSWERING PROCEDURE   119

## BACKGROUND OF THE INVENTION

### (1) Field of the Invention

The present invention generally relates to a system and method for automatically answering a production status inquiry, and more particularly a system and method for comparing the time limit of delivery specified by a customer with standard and minimum production periods in response to a production status inquiry from the customer and for automatically outputting an answer to the inquiry.

### (2) Description of the Related Art

Recently, it has been required that a small amount of various products be manufactured and delivered to customers in a short period of time. For this requirement, it is necessary to minimize the stock of products and effectively manage a variety of information about the production status, the requested date of delivery and so on. A conventional system for answering an inquiry from a customer only handles the requested date of delivery of products, and does not have any function for determining whether all items of products ordered by the customer can be delivered on the requested delivery date.

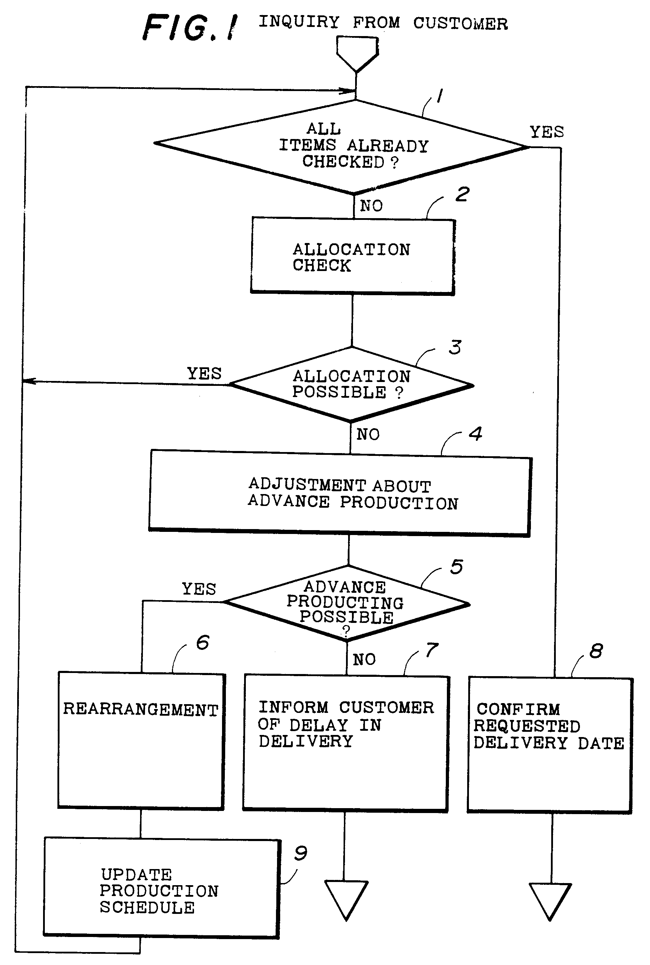

FIG.1 is a flowchart showing an inquiry answering procedure executed in a conventional production system as described above. At step 1, an inquiry from a customer is received and it is determined whether or not it is possible to deliver all items relating to the inquiry to the customer on the requested date of delivery. When the result at step 1 is YES, at step 8 the customer is informed of information confirming that all the items will be delivered on the requested date of delivery. It will be noted that when the result at step 1 is YES, steps which will be described below are repeatedly performed.

If the result at step step 1 is NO, at step 3, one item is selected from all the items relating to the inquiry and it is determined that stock which is related to the selected item and which satisfies the number (amount) of products ordered by the customer is available. In other words, step 3 determines whether or not the stock relating to the selected item can be allocated. When the result at step 3 is YES, the process returns to step 1. Then, the steps 1, 2 and 3 are performed in the same way as described above. On the other hand, when the result at step 3 is NO, step 4 is executed.

At step 4, a business department which is directly in contact with the customer negotiates with a production department for an advance production. If it is determined, at step 5, that the advance production is possible, the production schedule including an expected date when the advance production is completed is rearranged at step 6. At step 9, data relating to the rearrangement of the production schedule is updated. On the other hand, if it is determined, at step 5, that the advance production is impossible, the customer is informed of a delay in the requested date of delivery. It should be noted that step 7 is performed when it is determined, at step 5, that the advance production of any one of all the items relating to the inquiry is impossible.

However, production status inquiry answering systems as described above have the following disadvantages. First, it is necessary to manually perform steps 2 and 3. Thus, it takes a long time to make a decision. It is also necessary to manually perform steps 4 and 5. More specifically, it is necessary to manually determine how long the requested delivery date is allowed to be delayed and manually determine which item is allowed to be delayed in delivery. Further, it is very difficult to generate precise answers by manual determination.

## SUMMARY OF THE INVENTION

It is a general object of the present invention to provide an improved system and method for answering a production status inquiry in which the above-mentioned disadvantages are eliminated.

A more specific object of the present invention is to provide a system and method for automatically answering a production status inquiry in which an answer to the inquiry is automatically generated precisely.

The above-mentioned objects of the present invention are achieved by a method for automatically answering a production status inquiry supplied from an external device, the method comprising the steps of:

(a) receiving the production status inquiry;

(b) determining whether or not each item related to the production status inquiry can be delivered on a requested delivery date by comparing the requested delivery date with a minimum production period necessary for producing each item, each item indicating a respective product;

(c) generating a confirmation report showing that each item can be delivered on the requested delivery date when it is determined that each item can be delivered on the requested delivery date;

(d) determining whether or not each item which is determined not to be able to be delivered on the requested delivery date is allowed to be delivered on an extended delivery date by referring to a database storing an extension period defined for each predetermined item;

(f) generating an alarm report showing that each item cannot be delivered on the requested delivery date when it is determined that delivery of at least one item cannot be extended; and

(g) generating a delivery date extension report showing that each item related to the production status inquiry can be delivered on the requested delivery date or the extended delivery date when it is determined that each item which is determined not to be able to be delivered on the requested delivery date can be delivered on the extended delivery date.

The above-mentioned objects of the present invention are also achieved by a system for automatically answering a production status inquiry supplied from an external device coupled to the system, the system comprising:

receiving means for receiving the production status inquiry;

storing means for storing a requested delivery date related to the production status inquiry, a minimum production period necessary for producing each item, and an extension period defined for each predetermined item, each item indicating a respective product;

first determining means, operatively coupled to the receiving means and the storing means, for determining whether or not each item can be delivered on the requested delivery date by comparing the requested delivery date with the minimum production period;

first generating means, operatively coupled to the first determining means and said storing means, for generating a confirmation report showing that each item related to the production status inquiry can be delivered on the requested delivery date when the first determining means determines that each item can be delivered on the requested delivery date;

second determining means, operatively coupled to the first determining means and the storing means, for determining whether or not each item which is determined not to be able to be delivered on the requested delivery date is allowed to be delivered on an extended delivery date by referring to the extension period stored in the storing means;

second generating means, operatively coupled to the second determining means and the storing means, for generating an alarm report showing that each item cannot be delivered on the requested delivery date when the second determining means determines that delivery of at least one item cannot be extended; and

third generating means, operatively coupled to the second determining means and the storing means, for generating a delivery date extension report showing that each item related to the production status inquiry can be delivered on the requested delivery date or the extended delivery date when the second determining means determines that each item which is determined not to be able to be delivered on the requested delivery date can be delivered on the extended delivery date.

BRIEF DESCRIPTION OF THE DRAWINGS

Other objects, features and advantages of the present invention will become more apparent from the following detailed description when read in conjunction with the accompanying drawings, in which:

FIG.1 is a flowchart showing a procedure executed in a conventional production status inquiry answering system;

FIG.2 is a flowchart showing an overview of the present invention;

FIG.3 is a block diagram of a system for automatically answering a production status inquiry according to a preferred embodiment of the present invention;

FIG.4 is a block diagram of a production management system coupled to the system shown in FIG.3;

FIGS.5A through 5E are respectively diagrams showing tables stored in a database;

FIG.6 is a flowchart showing the operation of the system shown in FIG.3;

FIG.7 is a flowchart showing a procedure executed at step 111 shown in FIG.6;

FIG.8 is a flowchart showing a procedure executed at step 117 shown in FIG.6;

FIG.9 is a diagram showing a delivery date extension table formed in the database;

FIG.10 is a flowchart showing a procedure executed at step 118 shown in FIG.6;

FIG.11 is a flowchart showing a procedure executed at step 119 shown in FIG.6;

FIG.12 is a diagram showing a delivery date extension report; and

FIG.13 is a diagram showing an alarm report.

DESCRIPTION OF THE PREFERRED EMBODIMENTS

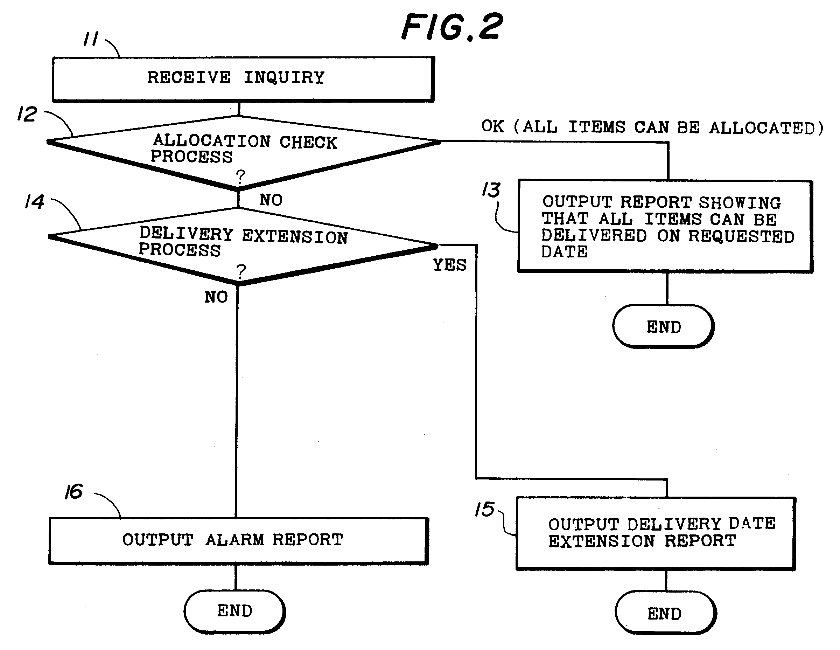

FIG.2 is a flowchart showing the principle of an automatic production status inquiry answering method according to the present invention. At step 11, a production status inquiry from a customer is received. Further, as will be described later, information about products in stock, information about the production schedule managed by a production management system (which will be described later), and other necessary information are received at step 11. After that, an allocation check process is carried out for each item at step 12. In the allocation check process, for each item unit, the requested date of delivery is compared with a standard production period of time as well as a limited number of production dates (a minimum production period of time). The standard production period is defined as a standard period of time required from the decision to make products to the completion of actual manufacturing. The minimum production period is defined as a shortest period of time required from the decision to make products to the completion of actual manufacturing.

When each item can be delivered on the requested delivery date by a standard production during the standard or minimum production period, the customer is informed, at step 13, that all the items can be delivered on the requested date of delivery. On the other hand, when it is determined that an item which is determined not to be able to be delivered on the requested delivery date, even by an accelerated production during the minimum production period, a delivery date extension process is carried out at step 14. In the delivery date extension process, regarding the item which is determined not to be able to be delivered on the requested delivery date by the accelerated production during the minimum production period, it is determined whether or not the delivery date is allowed to be extended in a way which will be described later.

If the result at step 14 is NO, an alarm report is output at step 16. The alarm report shows that it is impossible to deliver all the items on the requested date of delivery. In this case, for example, the business department negotiates with the customer for an extension of the requested date of delivery while taking into account the opinion of the production department. For example, a change in the allocation of some items will be discussed between the business department and the customer. On the other hand, when the result at step 14 is YES, a delivery date extension report is output at step 15. The requested delivery date extension report shows, for example, that some of the items requested by the customer can be delivered on the requested delivery date, but the other items can be delivered on extended delivery dates calculated automatically. In this case, for example, the business department negotiates with the customer for an extension of the requested delivery date.

The minimum production period used at step 12 is defined as follows:
(standard production period)/K.
where K is an arbitrary number. For example, K is equal to 2. As has been explained previously, it is determined that the allocation be possible if the requested delivery date comes after the minimum production period. Even if one of the items is determined to have to be delivered on the requested delivery date obtained before the end of the minimum production period, step 14 is performed.

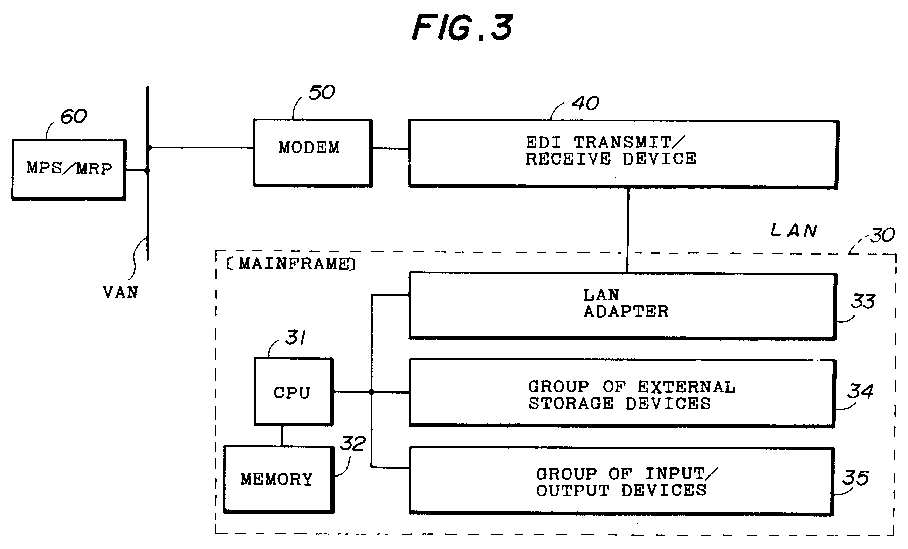

FIG.3 is a block diagram of the automatic production status inquiry answering system according to a preferred embodiment of the present invention. The system shown in FIG.3 includes a LAN (Local Area Network) mainframe 30, an EDI (Electronic Data Interchange) transmit/receive device 40, and a modem (modulator/demodulator) 50. The modem 50 is coupled to a value added network (VAN) via a communication line. The LAN mainframe 30 is composed of a central processing unit (CPU) 31, a memory 32, a LAN adapter 33, a group of external storage devices 34, and a group of input/output devices 35. The LAN adapter 33 communicates with the transmit/receive device 40. The group of external storage devices 34 forms databases, and store a variety of information which will be described later. The group of input/output devices 35 includes, for example, a keyboard, a display device, and a printer. The CPU 31 controls the entire operation of the LAN mainframe 30, as will be described later. The memory 32 is used as a work area of the CPU 31.

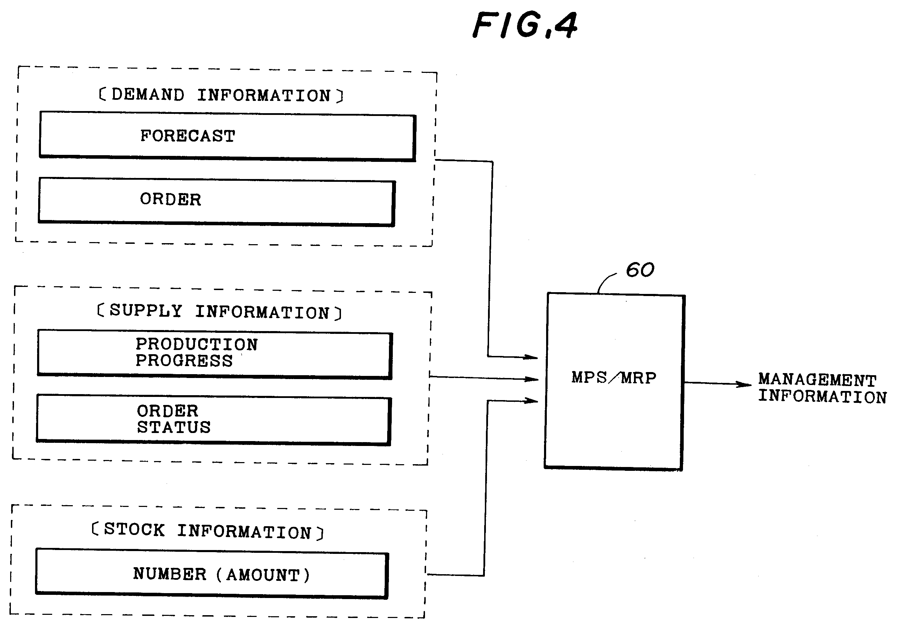

FIG.4 shows a production management system (MPS/MRP) 60 coupled to the value added network. As shown, the production management system 60 receives demand information, supply information and inventory information for finished goods. The demand information includes information on forecasted demand and a customer order. The supply information includes information on production progress and accepted orders. The inventory information for the finished goods includes information on the number (amount) of products on hand. The production management system 60 integrally manages the above-mentioned information, and outputs managed information, such as information about production routing status and information about the number of products which can be actually allocated.

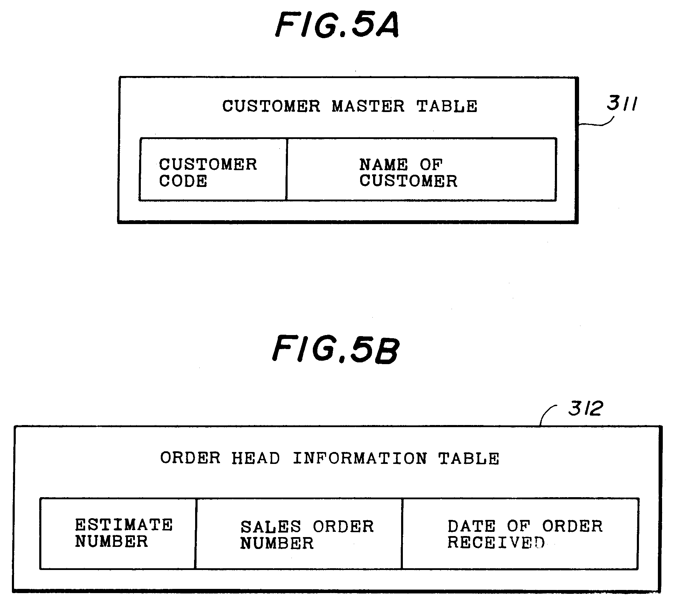

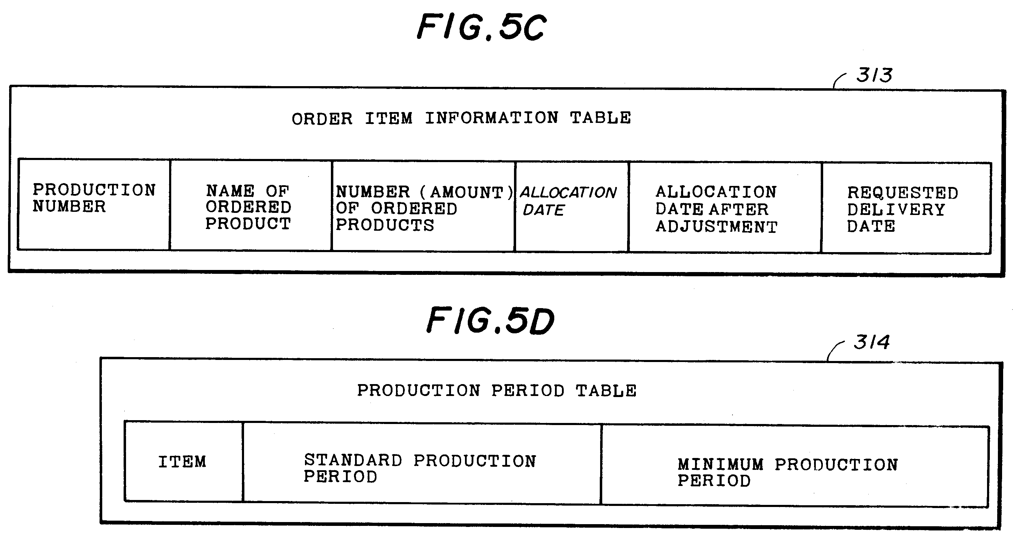

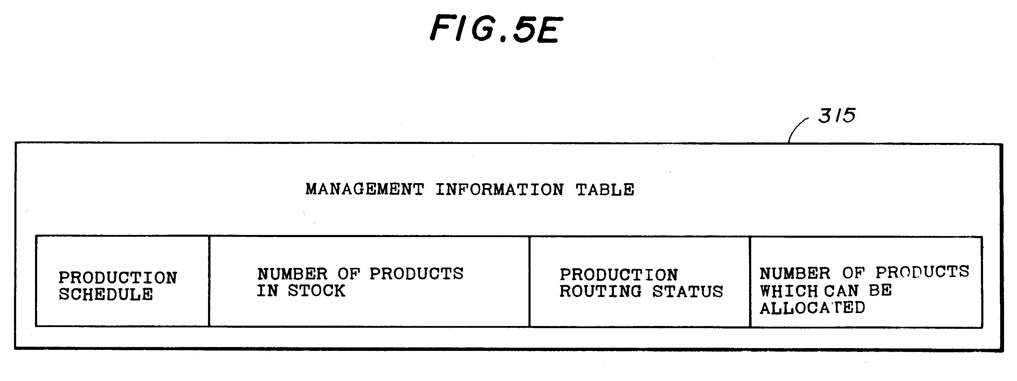

FIGS.5A through 5F respectively show information stored in the databases located in the group of storage units 34. FIG.5A shows a customer master table 311, which stores a customer code and the name of customer. FIG.5B shows an order head information table 312, which stores an estimate number, a sales order number and the date of an order received. FIG.5C shows an order item information table 313, which stores a production number, the name of an ordered product, the number (amount) of ordered products, an allocation date, an allocation date after the adjustment by the accelerated production, and the requested delivery date. FIG.5D shows a production period table 314, which stores an item of product, a standard production period and a minimum production period. The minimum production periods of different products may be different from each other. FIG.5E shows a table 315 of management information received from the aforementioned production management system shown in FIG.4. The information table 315 stores, the number of products in stock, a production schedule, a production routing status and the number of products which can be actually allocated. The information on the production routing status shows the progress in the production, such as the date of starting the production, or the date of completing a predetermined test. The number of products which can be allocated in the information table 315 is obtained by subtracting the number of products in stock from the number of products which have been lent, for example. It will be noted that desired information may be added to any of the above-mentioned tables.

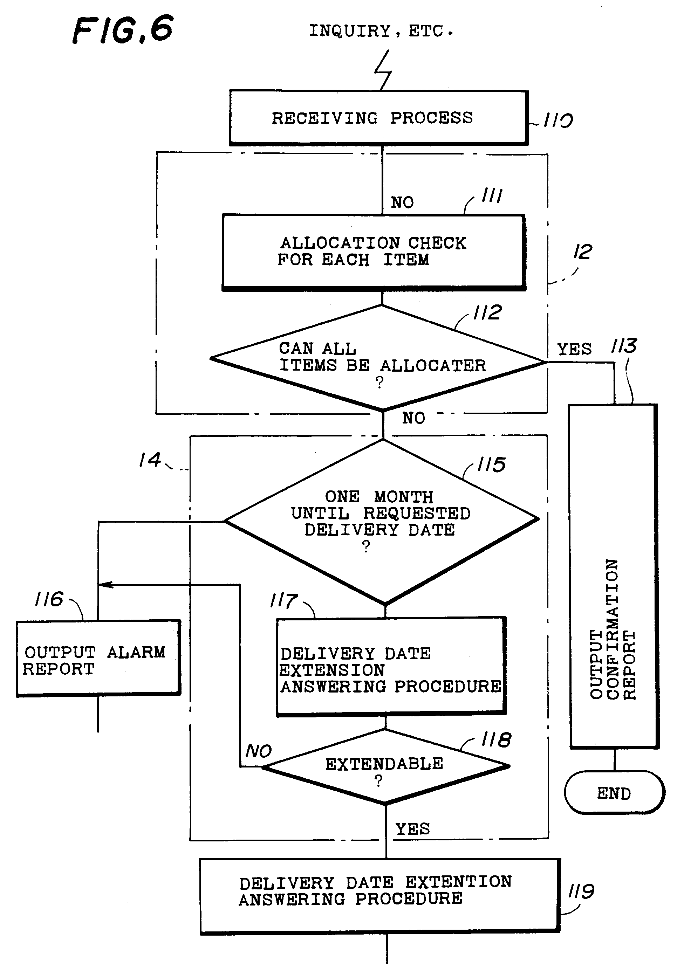

A description will now be given of the operation of the system shown in FIG.3 with respect to FIG.6. At step 110, which corresponds to step 11 shown in FIG.2, the mainframe 30 executes a receiving process under the control of the CPU 31. During the receiving process, the mainframe 30 receives an inquiry from a customer via the value added network, the modem 50 and the transmit/receive device 40. The inquiry may be generated by the aforementioned management system 60 in accordance with the particulars of the inquiry from the customer. Alternatively, it is possible to use a business terminal which is coupled to the value added network and which can output information on the inquiry to the value added network. Further, during the receiving process at step 110, the management information, as shown in FIG.5E, which is generated and output by the management system 60, is received.

The CPU 31 executes the aforementioned allocation check process 12, which consists of steps 111 and 112 shown in FIG.6.

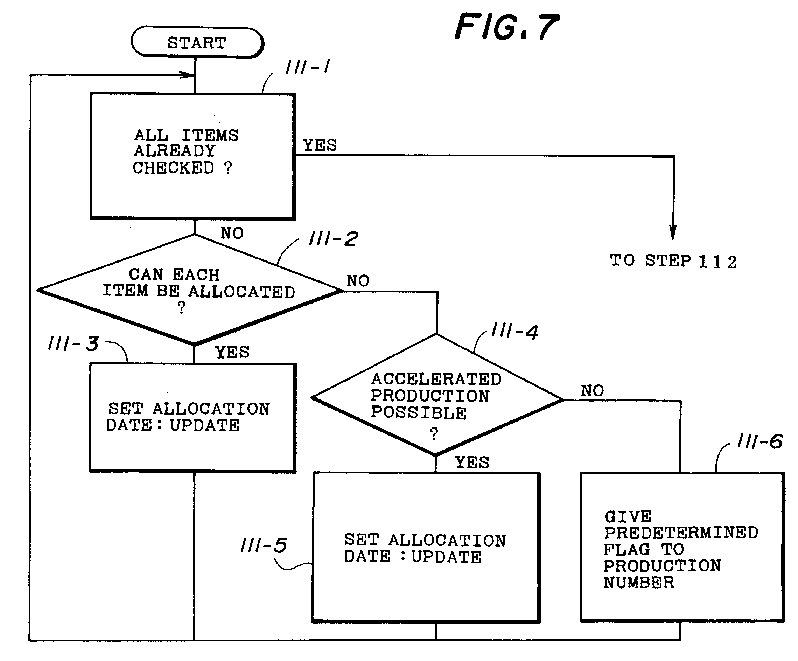

FIG.7 is a flowchart of an allocation check procedure during the step 111 shown in FIG.6. At step 111-1, the CPU 31 determines whether or not all items inquired about have been checked. When the result at step 111-1 is YES, the CPU 31 executes step 112. On the other hand, when the result obtained at step 111-1 is NO, at step 111-2 the CPU 31 determines whether or not each item inquired about can be allocated on the requested delivery date. During this determination procedure, the CPU 31 refers, for each item, to the order item information table 313, the production period table 314 and the management information table 315. If the number of ordered products relating to an item can be allocated and delivered on the requested delivery date by standard production during the standard production period, the CPU 31 determines that the item being considered can be allocated. Even if the necessary number of products being considered cannot be produced by the requested delivery date, the CPU 31 determines that the item being considered can be allocated if the necessary number of products is smaller than the number of products which can be actually allocated. It will be noted that information about the number of products which can be actually allocated is defined in the information table 315 shown in FIG.5E. Then, the CPU 31 subtracts the number of products which can be actually allocated from the requested number of products, so that the information table 315 is updated at step 111-3. At the same time, the CPU 31 determines the allocation date to be, for example, the requested delivery date or some days before the requested delivery date. The products in stock will be allocated on the allocation date (or the requested delivery date).

On the other hand, if it is determined, at step 111-2, that the item being considered cannot be allocated on the requested delivery date, the CPU 31 executes step 111-4. At step 111-4, the CPU 31 refers to the minimum production period defined in the production period table 314 and the production schedule defined in the information table 315, and determines whether or not the item being considered can be allocated by accelerated production during the minimum production period, by taking into account the production schedule and the production routing status. It can be seen from the production schedule and the production routing status how many products have been produced and stocked. If the sum total of the number of products which can be actually allocated and the number of products which can be produced by accelerated production is larger than the necessary number of products, at step 111-5, the CPU 31 determines the allocation date to be, for example, the requested delivery date or some days before the requested delivery date, and updates the number of products which can be actually allocated. The allocation date determined at step 111-5 is registered in the corresponding area of the table 313 related to allocation date after adjustment. Further, at step 111-5, the CPU 31 updates the date of completion of the production defined in the production schedule in the information table 315.

On the other hand, when it is determined, at step 111-4, that the necessary number of products cannot be obtained even by the accelerated production, a particular flag is given to, for example, the production number defined in the order item information table 313.

The above-mentioned procedure is repeatedly carried out until all the items have been checked. When all the item have been checked, that is, when the result obtained at step 111-1 is YES, the CPU 31 executes step 112 shown in FIG.6. At step 112, the CPU 31 determines whether or not all the items have been determined to be allocated at step 111. When the result at step 112 is YES, the CPU 31 executes step 113, at which step a confirmation report is displayed or printed. This confirmation report shows that all the items related to the inquiry will be delivered on the same requested delivery date. On the other hand, when it is determined, at step 112, that at least one of the items related to the inquiry cannot be allocated and delivered on the requested delivery date at step 111-4, the CPU 31 executes step 115 shown in FIG.6.

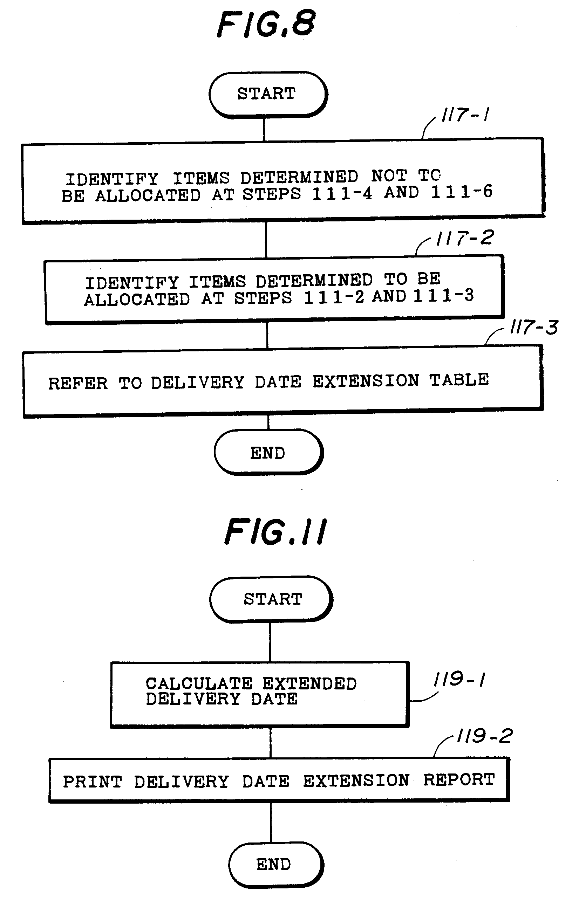

At step 115, the CPU 31 determines whether or not there is a predetermined period (one month, for example) until the requested delivery date. When it is determined, at step 115, that there is a period shorter than one month until the request delivery date, the CPU 31 executes step 116, at which the aforementioned alarm report is output. On the other hand, when there is one month or longer until the requested delivery date, the CPU 31 executes step 117, at which step a delivery date extension procedure shown in FIG.8 is carried out.

At step 117-1, the CPU 31 refers to the order item information table 313 shown in FIG.5C, and identifies items which are determined not to be able to be allocated at steps 111-4 and 111-6 shown in FIG.7. At subsequent step 117-2, the CPU 31 refers to the order item information table 313, and identifies which are determined to be able to be allocated at steps 111-2 and 111-3. At subsequent step 117-3, the CPU 31 refers to a delivery date extension table 316 stored in a database formed in the group 34 of external storage devices.

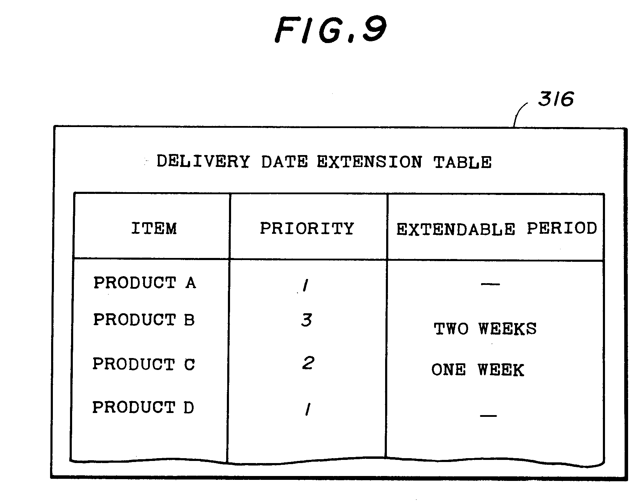

FIG.9 is a diagram showing the delivery date extension table 316, in which the priority order of production (delivery) and an extension period are defined for each item. Products A, B, C, D ... are products related to each other. For example, products A, B, C, D ... are related to a communication system, and are respectively a cable, a communication terminal, a repeater, and a connector. Normally, such products are not needed at the same time. For example, during the construction of the above-mentioned communication system, cables and connectors are needed first, repeaters are needed second, and communication terminals are needed third. That is, the priority of need of products, that is, the priority of the delivery date can be defined among products. In the example being considered, products A and D have the first priority, product C has the second priority, and product D has the third priority.

Products having the first priority must be duly delivered on the requested delivery date. However, products having a priority lower than the first priority may be delivered after the requested delivery date. The delivery date extension table 316 shown in FIG.9 defines an extension period for each item having a priority lower than the first priority. For example, the extension period equal to one week is defined for product C. That is, in view of the procedure for constructing the communication system, it is enough to deliver product C one week later than the requested delivery date related to each item having the first priority. Similarly, the extension period equal to two weeks is defined for product B.

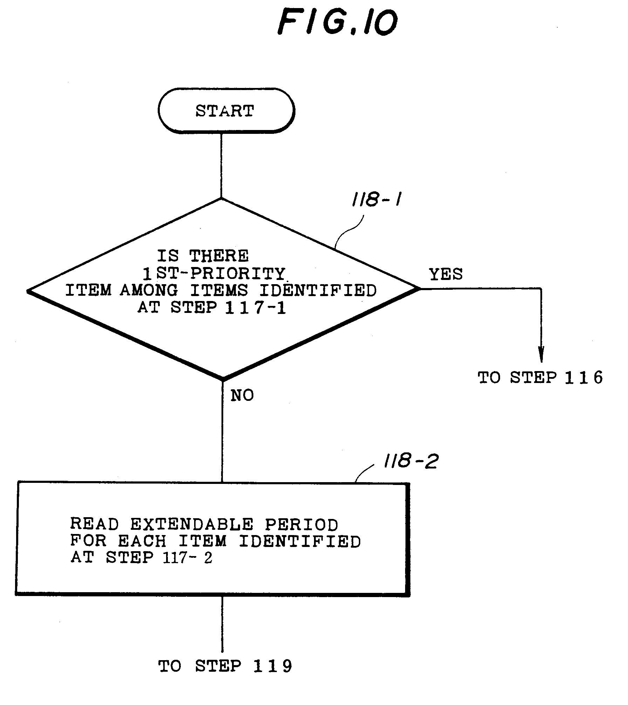

After executing step 117-3 shown in FIG.8, the CPU 31 executes a decision procedure at step 118 shown in FIG.6. The decision procedure is shown in FIG.10. During the decision procedure, the CPU 31 determines, at step 118-1, whether or not there is an item which is one of the items identified at step 117-1 shown in FIG.8 and which has the first (highest) priority. When the result obtained at step 118-1 is YES, that is, when it is determined that there is a first-priority item which cannot be delivered on the requested delivery date, the procedure proceeds to step 116, at which the alarm report is output. On the other hand, when it is determined, at step 118-1, that there is no first-priority item among the items identified at step 117-1, at step 118-2 the CPU 31 reads, from the delivery date extension table 316 shown in FIG.9, the extension period for each of the items identified at step 117-2 shown in FIG.8. If products B and C shown in FIG.9 are items identified at step 117-2, the extension periods for products B and C are read out respectively. Then, the CPU 31 executes step 119.

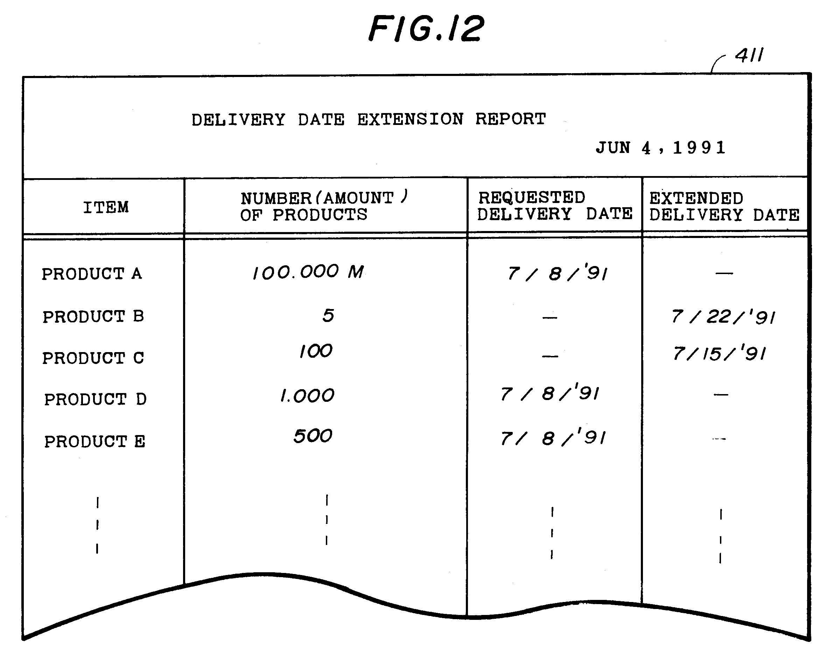

FIG.11 is a flowchart of a delivery date extension answering procedure executed at step 119. At step 119-1 shown in FIG.11, the CPU 31 calculates, for each item identified at step 117-2, the extended delivery date from the requested delivery date defined in the table 313 shown in FIG.5C and the previously read extension period defined in table 316 shown in FIG.9. At subsequent step 119-2, the CPU 31 creates a delivery date extension report 411 shown in FIG.12.

As shown in FIG.12, the delivery date extension report 411 includes information on the item, the number (amount) of products, the requested delivery date, and the extended delivery date. Assuming that the requested delivery date is July 8, 1991, the extended delivery date for product C calculated at step 119-1 is July 15, 1991, and the extended delivery date for product B is July 22, 1991. The delivery date extension report 411 is, for example, printed by the printer of the group 35 of input/output devices. The business department negotiates with the customer with extension of the delivery dates for the items by using the delivery date extension report 411.

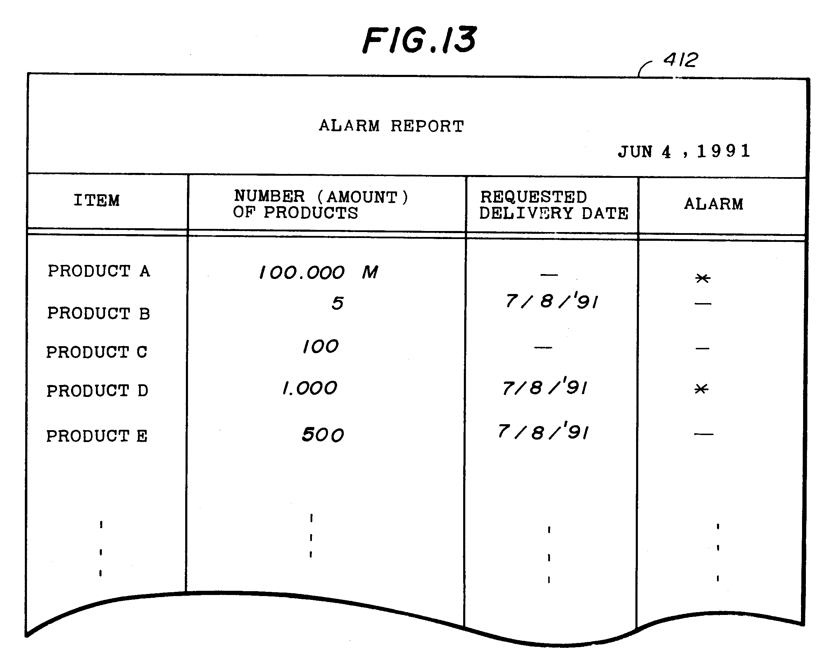

At step 116, the CPU 31 creates the alarm report identified by reference numeral 412 as shown in FIG.13. The alarm report 412 shown in FIG.13 shows information on the item, the number (amount) of products, the requested delivery date and an alarm indication. Each item subjected to the procedure of step 111-6 shown in FIG.7 cannot be delivered on the requested delivery date. An alarm indication * is given to each item subjected to the procedure of step 111-6. The information about the number (amount) of products and the requested delivery date can be obtained from the order item information table 313 shown in FIG.5C. If step 116 comes from step 115, the alarm indication will be given to each of all the items inquired about. The aforementioned confirmation report has, for example, the same requested delivery date printed for each item on the alarm report 412, while no alarm indication is given.

The present invention is not limited to the specifically disclosed embodiments, and variations and modifications may be made without departing from the scope of the present invention.

Reference signs in the claims are inteded for better understanding and shall not limit the scope.

**Claims**

1. A method for automatically answering a production status inquiry supplied from an external device, said method comprising the step of:

   (a) receiving said production status inquiry (steps 11, 110),

   characterized in that said method comprises:

   (b) determining whether or not each item related to said production status inquiry can be delivered on a requested delivery date by comparing the requested delivery date with a minimum production period necessary for producing each said item, each said item indicating a respective product (steps 12, 111);

   (c) generating a confirmation report showing that each said item can be delivered on the requested delivery date when it is determined that each said item can be delivered on the requested delivery date (steps 13, 113);

   (d) determining whether or not each item which is determined not to be able to be delivered on the requested delivery date is allowed to be delivered on an extended delivery date by referring to a database storing an extension period defined for each predetermined item (steps 14, 117);

   (f) generating an alarm report (412) showing that each said item cannot be delivered on the requested delivery date when it is determined that delivery of at least one item cannot be extended (steps 16, 116); and

   (g) generating a delivery date extension report (411) showing that each said item related to the production status inquiry can be delivered on the requested delivery date or the extended delivery date when it is determined that each said item which is determined not to be able to be delivered on the requested delivery date can be delivered on the extended delivery date (steps 15, 119).

2. A method as claimed in claim 1, characterized in that said method further comprises the step of determining whether or not each item related to said production status inquiry can be delivered on the requested delivery date by comparing the requested delivery date with a standard production period necessary for producing each said item (step 111-2), and

   characterized in that said step (b) is carried out for an item which is determined not to be able to be delivered on the requested delivery date by a standard production during said standard production period.

3. A method as claimed in claim 2, characterized in that said minimum production period is shorter than said standard production period and is defined in common for each said item.

4. A method as claimed in claim 1, characterized in that said method further comprises the step of (h) determining whether or not each item related to said production status inquiry can be delivered on the requested delivery date on the basis of the requested delivery date, a standard production period necessary for producing each said item, and an amount of stock of each said item (step 111-2), said standard production period and the amount of stock being defined in said database, and

   characterized in that said step (b) is carried out for an item which is determined not to be able to be delivered on the requested delivery date by said step (h).

5. A method as claimed in claim 4, characterized in that said method further comprises the step of updating the amount of stock of an item which is determined to be able to be delivered on the requested delivery date by the standard production (step 111-3).

6. A method as claimed in claim 1, characterized in that said method further comprises the step of (h) determining whether or not each item related to said production status inquiry can be delivered on the requested delivery date on the basis of an amount of stock of each said item in addition to the minimum production period and the requested delivery date (step 111-4), the amount of stock being defined in said database, and

characterized in that said step (d) is carried out for an item which is determined not to be able to be delivered on the requested delivery date by said step (h).

7. A method as claimed in claim 6,
characterized in that said method further comprises the step of updating the amount of stock of an item which is determined to be able to be delivered on the requested delivery date by an accelerated production during said minimum production period (step 111-5).

8. A method as claimed in claim 1,
characterized in that said method further comprises the steps of:

determining whether or not there is a predetermined period up to the requested delivery date (step 115); and

generating said alarm report when it is determined that there is a period shorter than said predetermined period up to the requested delivery date (steps 16, 116).

9. A method as claimed in claim 1,
characterized in that said step (d) comprises the step of calculating said extended delivery date from said requested delivery date and said extension period (119-1).

10. A method as claimed in claim 1,
characterized in that said extension period is defined in accordance with a priority on delivery of each said predetermined item.

11. A system for automatically answering a production status inquiry supplied from an external device coupled to said system, said system comprising:

receiving means (40, 50) for receiving said production status inquiry,

characterized in that said system comprises: storing means (34) for storing a requested delivery date related to said production status inquiry, a minimum production period necessary for producing each item, and an extension period defined for each predetermined item, each said item indicating a respective product;

first determining means (31), operatively coupled to said receiving means and said storing means, for determining whether or not each said item can be delivered on the requested delivery date by comparing the requested delivery date with the minimum production period;

first generating means (35), operatively coupled to said first determining means and said storing means, for generating a confirmation report showing that each said item related to said production status inquiry can be delivered on the requested delivery date when said first determining means determines that each said item can be delivered on the requested delivery date;

second determining means (31), operatively coupled to said first determining means and said storing means, for determining whether or not each item which is determined not to be able to be delivered on the requested delivery date is allowed to be delivered on an extended delivery date by referring to said extension period stored in said storing means;

second generating means (35), operatively coupled to said second determining means and said storing means, for generating an alarm report (412) showing that each said item cannot be delivered on the requested delivery date when said second determining means determines that delivery of at least one item cannot be extended; and

third generating means (31), operatively coupled to said second determining means and said storing means, for generating a delivery date extension report (411) showing that each said item related to the production status inquiry can be delivered on the requested delivery date or the extended delivery date when said second determining means determines that each said item which is determined not to be able to be delivered on the requested delivery date can be delivered on the extended delivery date.

12. A system as claimed in claim 11,
characterized in that said system further comprises third determining means (31) for determining whether or not each item related to said production status inquiry can be delivered on the requested delivery date by comparing the requested delivery date with a standard production period necessary for producing each item, and

characterized in that said first determining means carries out its determination procedure for an item which is determined not to be able to be delivered on the requested delivery date by a standard production during said standard production period.

**13.** A system as claimed in claim 12, characterized in that said minimum production period is shorter than said standard production period and is defined in common for each said item.

**14.** A system as claimed in claim 11, characterized in that said system further comprises third determining means (31) for determining whether or not each item related to said production status inquiry can be delivered on the requested delivery date on the basis of the requested delivery date, a standard production period necessary for producing each said item, and an amount of stock of each said item, said standard production period and the amount of stock being stored in said storing means, and

characterized in that said first determining means carries out its determination procedure for an item which is determined not to be able to be delivered on the requested delivery date by a standard production during said standard production period.

**15.** A system as claimed in claim 14, characterized in that said system comprises updating means (31) for updating the amount of stock of an item which is determined to be able to be delivered on the requested delivery date by the standard production.

**16.** A system as claimed in claim 11, characterized in that said system further comprises third determining means (31) for determining whether or not each item related to said production status inquiry can be delivered on the requested delivery date on the basis of an amount of stock of each said item in addition to the minimum production period and the requested delivery date, the amount of stock being stored in said storing means, and

characterized in that said second determining means carries out its determination procedure for an item which is determined not to be able to be delivered on the requested delivery date by said third determining means.

**17.** A system as claimed in claim 16, characterized in that said system further comprises updating means (31) of updating the amount of stock of an item which is determined to be able to be delivered on the requested delivery date by an accelerated production during said minimum production period.

**18.** A system as claimed in claim 11, characterized in that said system further comprises:

third means (31) for determining whether or not there is a predetermined period up to the requested delivery date; and

means (31) for making said second generating means generate said alarm report when said third determining means determines that there is a period shorter than said predetermined period up to the requested delivery date.

**19.** A system as claimed in claim 11, characterized in that said second determining means comprises means (31) for calculating said extended delivery date from said requested delivery date and said extension period.

**20.** A system as claimed in claim 11, characterized in that said extension period is defined in accordance with a priority on delivery of each of said predetermined item.

*FIG. 1* INQUIRY FROM CUSTOMER

1 — ALL ITEMS ALREADY CHECKED ? — YES

NO

2 — ALLOCATION CHECK

3 — ALLOCATION POSSIBLE ? — YES

NO

4 — ADJUSTMENT ABOUT ADVANCE PRODUCTION

5 — ADVANCE PRODUCTING POSSIBLE ? — YES

NO

6 — REARRANGEMENT

7 — INFORM CUSTOMER OF DELAY IN DELIVERY

8 — CONFIRM REQUESTED DELIVERY DATE

9 — UPDATE PRODUCTION SCHEDULE

# FIG.2

11 RECEIVE INQUIRY

12 ALLOCATION CHECK PROCESS ? → OK (ALL ITEMS CAN BE ALLOCATED)

NO

13 OUTPUT REPORT SHOWING THAT ALL ITEMS CAN BE DELIVERED ON REQUESTED DATE

END

14 DELIVERY EXTENSION PROCESS ? → YES

NO

15 OUTPUT DELIVERY DATE EXTENSION REPORT

END

16 OUTPUT ALARM REPORT

END

EP 0 463 616 A2

# FIG.3

*60* MPS/MRP

VAN

*50* MODEM

*40* EDI TRANSMIT/ RECEIVE DEVICE

LAN

*-30*

[MAINFRAME]

LAN ADAPTER — *33*

*31* CPU

GROUP OF EXTERNAL STORAGE DEVICES — *34*

*32* MEMORY

GROUP OF INPUT/ OUTPUT DEVICES — *35*

EP 0 463 616 A2

# FIG.4

[DEMAND INFORMATION]

FORECAST

ORDER

[SUPPLY INFORMATION]

PRODUCTION
PROGRESS

ORDER
STATUS

[STOCK INFORMATION]

NUMBER (AMOUNT)

60

MPS/MRP → MANAGEMENT INFORMATION

EP 0 463 616 A2

# FIG.5A

CUSTOMER MASTER TABLE — 311

| CUSTOMER CODE | NAME OF CUSTOMER |
|---|---|

# FIG.5B

312

ORDER HEAD INFORMATION TABLE

| ESTIMATE NUMBER | SALES ORDER NUMBER | DATE OF ORDER RECEIVED |
|---|---|---|

EP 0 463 616 A2

# FIG.5C

ORDER ITEM INFORMATION TABLE — 313

| PRODUCTION NUMBER | NAME OF ORDERED PRODUCT | NUMBER (AMOUNT) OF ORDERED PRODUCTS | ALLOCATION DATE | ALLOCATION DATE AFTER ADJUSTMENT | REQUESTED DELIVERY DATE |
|---|---|---|---|---|---|
| | | | | | |

# FIG.5D

PRODUCTION PERIOD TABLE — 314

| ITEM | STANDARD PRODUCTION PERIOD | MINIMUM PRODUCTION PERIOD |
|---|---|---|
| | | |

EP 0 463 616 A2

# FIG.5E

315

| MANAGEMENT INFORMATION TABLE | | | |
|---|---|---|---|
| PRODUCTION SCHEDULE | NUMBER OF PRODUCTS IN STOCK | PRODUCTION ROUTING STATUS | NUMBER OF PRODUCTS WHICH CAN BE ALLOCATED |

# FIG.6

INQUIRY, ETC.

RECEIVING PROCESS ~110

NO

ALLOCATION CHECK
FOR EACH ITEM 111

12

CAN ALL
ITEMS BE ALLOCATER
? 112

YES 113

NO

14

ONE MONTH
UNTIL REQUESTED
DELIVERY DATE
? 115

OUTPUT ALARM
REPORT 116

DELIVERY DATE
EXTENSION
ANSWERING PROCEDURE 117

OUTPUT CONFIRMATION REPORT 113

NO

EXTENDABLE
? 118

END

YES

DELIVERY DATE EXTENTION
ANSWERING PROCEDURE 119

# FIG.7

START

_III-1_

ALL ITEMS
ALREADY
CHECKED ?

YES → TO STEP 112

NO

_III-2_

CAN EACH
ITEM BE ALLOCATED
?

NO

_III-3_

SET ALLOCATION
DATE : UPDATE

YES

_III-4_

ACCELERATED
PRODUCTION
POSSIBLE
?

NO

YES

_III-5_

SET ALLOCATION
DATE : UPDATE

_III-6_

GIVE
PREDETERMINED
FLAG TO
PRODUCTION
NUMBER

EP 0 463 616 A2

# FIG.8

START

117-1

IDENTIFY ITEMS DETERMINED NOT TO
BE ALLOCATED AT STEPS 111-4 AND 111-6

117-2

IDENTIFY ITEMS DETERMINED TO BE
ALLOCATED AT STEPS 111-2 AND 111-3

117-3

REFER TO DELIVERY DATE EXTENSION TABLE

END

# FIG.11

START

CALCULATE EXTENDED
DELIVERY DATE

119-1

119-2

PRINT DELIVERY DATE EXTENSION REPORT

END

# FIG.9

EP 0 463 616 A2

316

**DELIVERY DATE EXTENSION TABLE**

| ITEM | PRIORITY | EXTENDABLE PERIOD |
|------|----------|-------------------|
| PRODUCT A | 1 | — |
| PRODUCT B | 3 | TWO WEEKS |
| PRODUCT C | 2 | ONE WEEK |
| PRODUCT D | 1 | — |

# FIG.10

START

118-1

IS THERE
1ST-PRIORITY
ITEM AMONG ITEMS IDENTIFIED
AT STEP 117-1

YES

TO STEP 116

NO

118-2

READ EXTENDABLE PERIOD
FOR EACH ITEM IDENTIFIED
AT STEP 117-2

TO STEP 119

# FIG.12

411

**DELIVERY DATE EXTENSION REPORT**

JUN 4 , 1991

| ITEM | NUMBER (AMOUNT) OF PRODUCTS | REQUESTED DELIVERY DATE | EXTENDED DELIVERY DATE |
|---|---|---|---|
| PRODUCT A | 100.000 M | 7 / 8 / '91 | — |
| PRODUCT B | 5 | — | 7 / 22 / '91 |
| PRODUCT C | 100 | — | 7 / 15 / '91 |
| PRODUCT D | 1.000 | 7 / 8 / '91 | — |
| PRODUCT E | 500 | 7 / 8 / '91 | — |

## FIG.13

412

| ALARM REPORT | | | |
|---|---|---|---|
| | | | JUN 4 , 1991 |
| ITEM | NUMBER (AMOUNT) OF PRODUCTS | REQUESTED DELIVERY DATE | ALARM |
| PRODUCT A | 100.000 M | — | ✳ |
| PRODUCT B | 5 | 7 / 8 / '91 | — |
| PRODUCT C | 100 | — | — |
| PRODUCT D | 1.000 | 7 / 8 / '91 | ✳ |
| PRODUCT E | 500 | 7 / 8 / '91 | — |

EP 0 463 616 A2